Europäisches Patentamt

European Patent Office

Office européen des brevets

(11) Numéro de publication : **0 080 909**
**B1**

(12) **FASCICULE DE BREVET EUROPÉEN**

(51) Int. Cl.⁴ : **H 02 B 1/04**

(45) Date de publication du fascicule du brevet :
21.11.85

(21) Numéro de dépôt : 82401646.3

(22) Date de dépôt : 10.09.82

(54) Appareil électrique, en particulier relais ou petit contacteur, à fixer sur rail profilé.

(30) Priorité : 15.09.81 FR 8117721

(43) Date de publication de la demande :
08.06.83 Bulletin 83/23

(45) Mention de la délivrance du brevet :
21.11.85 Bulletin 85/47

(84) Etats contractants désignés :
CH DE GB IT LI SE

(56) Documents cités :
DE-A- 2 027 157
DE-B- 1 159 537
DE-B- 1 170 028
FR-A- 2 030 852

(73) Titulaire : **LA TELEMECANIQUE ELECTRIQUE**
**33 bis, avenue du Maréchal Joffre**
**F-92000 Nanterre (FR)**

(72) Inventeur : **Lesous, Jean-Michel**
**Les Barballères**
**F-86300 Bonnes (FR)**
Inventeur : **Lerude, Gérard**
**Parc Mare Polis Résidence "La Vigie" Chemin du Puy**
**F-06600 Antibes (FR)**
Inventeur : **Jullien, Claude**
**Aubigny**
**F-79390 Thenezay (FR)**

(74) Mandataire : **Marquer, Francis**
**CABINET MOUTARD 35, avenue Victor Hugo Résidence Champfleury**
**F-78180 Voisins le Bretonneux (FR)**

Jouve, 18, rue St-Denis, 75001 Paris, France

EP 0 080 909 B1

## Description

L'invention se rapporte à un appareil électrique, en particulier un relais ou un petit contacteur, comprenant un boîtier prismatique creux apte à recevoir un dispositif particulier et dont une région inférieure, opposée aux bornes de raccordement, présente une ouverture rectangulaire, cette ouverture étant obturée par un fond amovible de forme générale rectangulaire qui est réalisé en matière thermoplastique et qui comprend, d'une part, du côté de sa face supérieure, des moyens d'association comportant des crochets d'association aptes à coopérer avec des moyens de maintien disposés sur le boîtier pour assurer la fixation dudit fond sur ledit boîtier et, d'autre part, du côté de sa face inférieure, deux ailes latérales opposées présentant des parties biseautées analogues à des crochets pour recevoir les ailes d'un rail profilé métallique fixe.

Dans un appareil connu, dont la constitution générale répond à celle définie ci-dessus, le couvercle est présenté sous la forme d'une embase de fond de dimensions importantes, ce qui amène à effectuer l'association du couvercle avec des pattes latérales du boîtier. Par le brevet DE-A-2 027 157 on connaît également un appareil présentant un fond amovible réalisé en matière thermoplastique et qui comprend deux prolongements opposés présentant chacun, sur sa face supérieure, une branche terminée par un crochet coopérant avec des moyens de fixation du boîtier et, sur sa face inférieure, une aile présentant des parties biseautées analogues à des crochets, pour recevoir les ailes d'un rail profilé. Toutefois, de telles mesures ne peuvent être adoptées lorsque le boîtier présente des dimensions réduites voisines de celles de la largeur du rail profilé, car la quantité de matière consacrée à ce couvercle atteindrait des valeurs hors de proportion avec les fonctions simples qu'il doit assurer.

L'invention se propose par suite de fournir un appareil électrique faisant appel à une disposition générale connue et dans lequel des mesures sont prises pour diminuer la quantité de matière plastique utilisée, tant lors de la fabrication du fond que lors de celle du boîtier.

Des mesures complémentaires visant à faciliter le montage du fond et à améliorer la solidité de l'association entre le boîtier et le couvercle seront précisées ultérieurement ; en effet, bien que la rigidité des pièces mécaniques croisse relativement vite par rapport aux dimensions lorsque celles-ci diminuent, il importe de prêter une attention particulière aux phénomènes de fluage des matières plastiques qui apparaissent lorsque celles-ci sont utilisées en faibles épaisseurs, et que, par suite, les pressions unitaires qu'elles subissent deviennent plus élevées.

Pour parvenir à ces résultats, l'invention propose de réaliser un appareil électrique comme indiqué dans le préambule de la revendication 1, caractérisé en ce que lesdites ailes latérales opposées présentent une largeur inférieure à celle qui sépare deux premières parois latérales opposées du boîtier, vers lesquelles elles sont dirigées, chacune de ces ailes portant une paire d'arceaux élastiques qui sont reliés entre eux par une barrette placée dans un plan moyen parallèle à celui desdites ailes, chaque barrette portant un premier crochet d'accrochage apte à coopérer avec chacune des ailes du profilé, et en ce que lesdits moyens d'association montés sur ledit fond comprennent des seconds crochets dits d'association prévus de manière à coopérer avec des encoches et des saillies placées dans les régions inférieures opposées de deux secondes parois latérales perpendiculaires auxdites premières parois.

D'autres particularités et mesures annexes visant l'obtention de résultats complémentaires, seront mieux comprises à la lecture de la description ci-après, relative à une forme d'exécution de l'invention.

Au dessin annexé :

La figure 1 représente en élévation une vue en coupe partielle de l'appareil, passant par un plan TT' perpendiculaire au plan du rail de fixation et parallèle à l'axe longitudinal YY' de celui-ci ;

La figure 2 est une vue de côté du fond amovible de l'appareil ;

La figure 3 est une vue de dessus du fond coupé par un plan médian PP' perpendiculaire à TT' ;

La figure 4 est une vue de dessus extérieure du fond ;

La figure 5 est une vue de côté du boîtier de l'appareil, coupé par un plan SS' ; et

la figure 6 est une vue extérieure en perspective de l'appareil, où le boîtier et le fond sont associés.

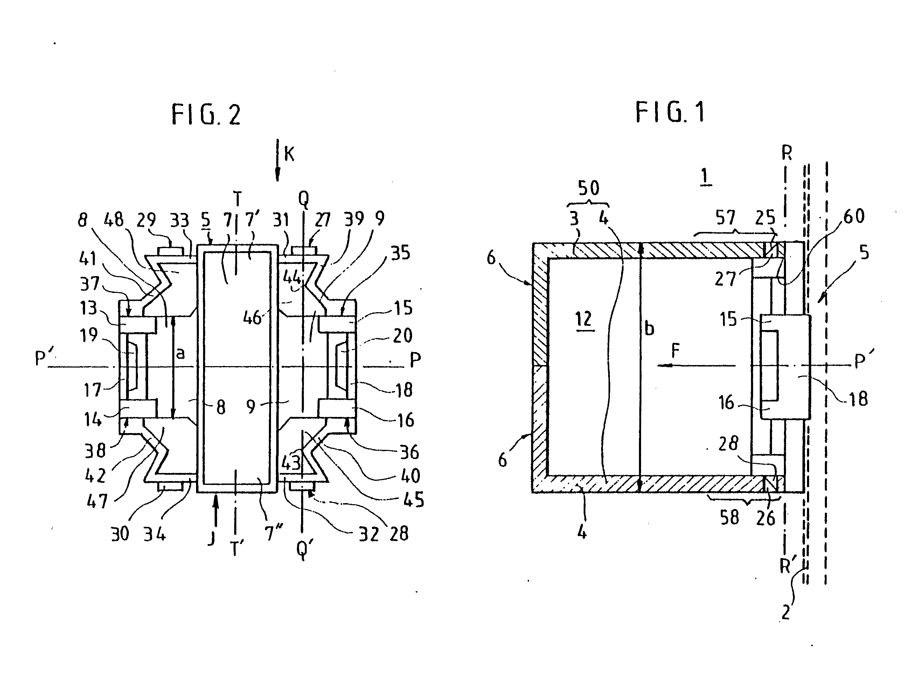

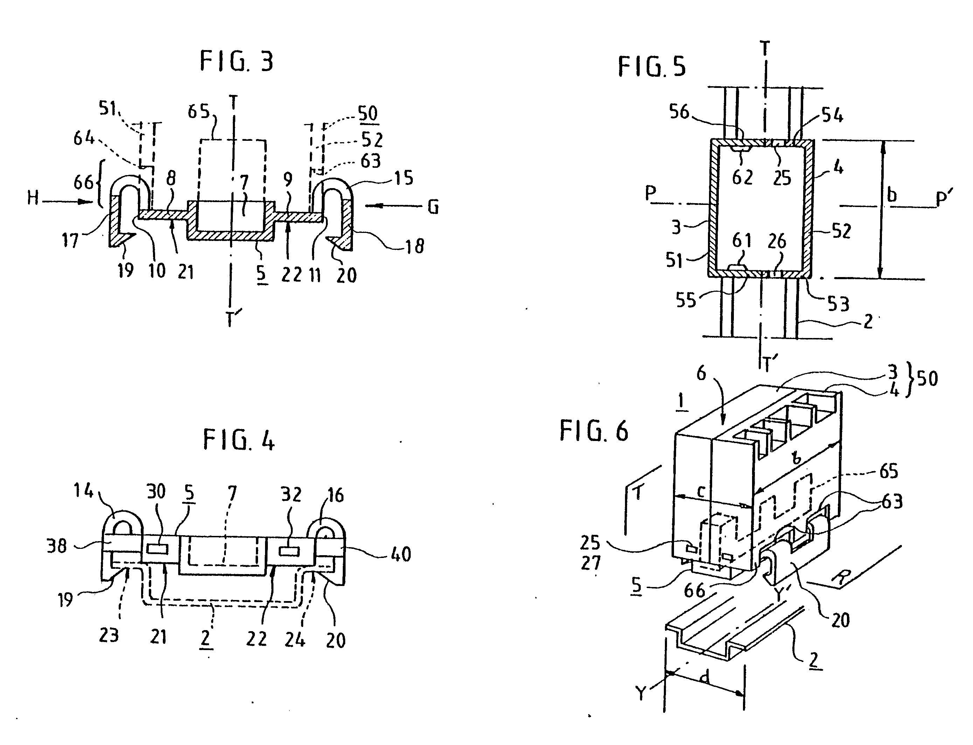

L'appareil électrique 1 visible en coupe par le plan PP' de la figure 2, qui peut être un petit contacteur, un relais ou tout appareil de dimensions petites à moyennes, fait appel à un boîtier qui est apte à se fixer une fois fermé sur un profilé chapeau normalisé 2 et qui comprend une enveloppe ou boîtier 50 formé principalement par l'association de deux demi-boîtiers 3, 4 symétriques par rapport à un plan médian TT' et un fond 5, opposé à la face avant 6 portant généralement des bornes de raccordement et faisant office de couvercle, voir figure 1 et figure 6, où le fond n'est pas coupé. Le boîtier peut également être constitué par une seule pièce ayant des parois minces. On remarquera que le plan TT' est également un plan perpendiculaire au plan dans lequel se trouvent les ailes 23, 24 du profilé et passe par l'axe longitudinal YY' de ce profilé.

Une partie au moins des organes internes de l'appareil est introduite dans l'enveloppe, dans le sens F, lorsque le fond amovible 5 est enlevé, puis, le fond est remis en place dans l'ouverture rectangulaire 60 du boîtier qui est apte à le recevoir.

La figure 2 représente une vue de gauche du fond 5 (donc en sens inverse de F), qui comprend principalement un logement 7 parallèle à TT' (qui maintient ou participe, par exemple, au maintien de l'électro-aimant 65 d'un relais placé à l'intérieur), et qui présente deux ailes 8, 9 solidaires de ce logement placées de part et d'autre de lui, voir aussi figure 6. Chacune de ces ailes qui porte à son extrémité libre 10, 11 deux arceaux élastiquement déformables 13, 14 respectivement 15, 16, possède une largeur a inférieure à la largeur b séparant les parois 51, 52 opposées du boîtier vers laquelle elle est dirigée, voir aussi la figure 1.

Les extrémités de ces arceaux, dirigés vers le bas de la figure, et donc en sens opposé au volume interne 12 et à la face 6 de l'appareil, sont reliées entre elles par une barrette 17 respectivement 18, ces barrettes étant parallèles à un plan moyen RR' parallèle au profilé et dans lequel sont placés le fond 5 et les régions inférieures 58, 57 du boîtier qui portent l'ouverture 60.

Chacune de ces barrettes porte sur sa surface dirigée vers le plan médian TT' un crochet 19 respectivement 20.

Ces crochets 19, 20 servent, en coopération avec les surfaces extérieures 21, 22 des ailes, voir figure 4, à la fixation de l'appareil sur les ailes 23, 24 du profilé normalisé 2.

Comme on le voit à la figure 1, chaque demi-boîtier 3, 4 présente des encoches telles que 25, 26 dans lesquelles pénètrent des crochets 27, 28 et 29, 30 solidaires du fond 5. Ces encoches possèdent des rebords dirigés vers la gauche de la figure 1, qui pourraient également être portés par des saillies internes telles que 61, 62.

Ces crochets, qui servent à l'association élastique et démontable du fond, sont portés chacun par une portion de matière élastique 31, 32, 33, 34 solidaire du logement et sont placés aux extrémités opposées 7', 7" de ce logement.

Ces portions de matière s'étendent parallèlement aux ailes et sont reliées à des régions mobiles des arceaux déformables représentées en 35, 36, 37, 38, par des portions de matière élastique 39, 40, 41, 42 présentant chacune un pli saillant tel que 43 et 44 dirigé vers le logement 7 et placé dans un espace tel que 45 respectivement 46 qui se trouve entre une aile telle que 9 et deux parois 31 respectivement 32. Ces portions de matière sont donc mobiles dans le plan RR' lorsqu'un effort leur est communiqué dans ce plan.

Lorsque le fond 5 est monté dans l'ouverture 60 de l'enveloppe 3, 4 ou boîtier 50, les crochets 27, 28, 29 et 30 reculent pour pénétrer ensuite dans les encoches telles que 25, 26 ou franchir les saillies 61, 62 ; ce mouvement de recul est possible en raison de la forme pliée des portions 39, 40, 41, 42.

Lorsque l'appareil est présenté en sens inverse de F sur un profilé chapeau 2, les crochets d'accrochage 19, 20 reculent vers l'extérieur en raison de l'élasticité des arceaux 13, 14, 15, 16, et de rampes inclinées placées de façon connue sur des surfaces extérieures des crochets d'accrochage.

Ce mouvement de recul entraîne un déplacement des régions 35, 36, 37, 38 qui provoque une déformation des portions 39, 40, 41, 42 qui est de sens inverse à la précédente, de sorte que la pénétration des crochets 27, 28, 29 et 30 dans les encoches ou sur les saillies est confirmée et que le fond est très rigidement associé au boîtier. Cet effet est important dans la mesure où au moment de la séparation volontaire de l'appareil et du profilé, les crochets 20, 19 doivent être écartés, ce qui empêche une séparation intempestive du fond 5 et du boîtier 3, 4 ; par ailleurs la transmission permanente d'un effort sur les crochets 27... 30 après encliquetage sur le profilé, permet de compenser d'éventuels fluages du matériau du fond ou du boîtier.

Le fond amovible peut être désolidarisé du boîtier, lorsque l'appareil est séparé du profilé, par une pression exercée sur les deux barrettes 17, 18 en sens G et H ; cette pression provoque en effet un mouvement et un pliage tels des portions de matière 39, 40, 41, 42 que les parois 31, 32, 33, 34 sont élastiquement déformées vers l'intérieur en sens K et J, et que les crochets 27, 28, 29, 30 sont dégagés des encoches ou saillies, ce qui facilite grandement l'enlèvement du fond, par exemple pour opérer un changement de la bobine d'un électro-aimant.

Le plan de joint des deux demi-boîtiers 3, 4 passe, lorsque ce boîtier est réalisé en deux pièces, par le plan TT' de sorte que les efforts exercés latéralement (c'est-à-dire dans les sens inverses de J et K) par les crochets d'association 27... 30 ne s'ajoutent pas aux efforts exercés transversalement (c'est-à-dire en sens inverse, de G, H pour déformer ou ouvrir les régions inférieures 57, 58 du boîtier ; ce dernier comportera de préférence des dégagements tels que 63, 64 dans la région inférieure 66 voisine de l'ouverture 60, où passent les arceaux, pour éviter que ceux-ci viennent en contact avec lui, cette mesure procurant un gain de place et améliorant par suite la réduction de matière nécessaire.

Ce dispositif de fixation à fond amovible est particulièrement avantageux lorsque les dimensions transversales c du boîtier de l'appareil sont voisines des dimensions transversales d du profilé.

## Revendications

1. Appareil électrique, en particulier un relais ou un petit contacteur, comprenant un boîtier (50) prismatique creux apte à recevoir un dispositif particulier et dont une région inférieure, opposée aux bornes de raccordement, présente une ouverture rectangulaire (60), cette ouverture étant obturée par un fond amovible (5) de forme générale rectangulaire qui est réalisé en matière thermoplastique et qui comprend, d'une part, du côté de sa face supérieure, des moyens d'association comportant des crochets d'association (27, 28, 29, 30) aptes à coopérer avec des moyens de maintien disposés sur le boîtier (50) pour assurer la fixation dudit fond (5) sur ledit boîtier (50) et, d'autre part, du côté de sa face inférieure, deux ailes latérales opposées (8, 9) présentent des parties biseautées analogues à des crochets (19, 20) pour recevoir les ailes (23, 24) d'un rail profilé métallique (2) fixe, caractérisé en ce que lesdites ailes latérales opposées (8, 9) présentent une largeur (a) inférieure à celle (b) qui sépare deux premières parois latérales opposées (53, 54) respectivement (55, 56) du boîtier (50), vers lesquelles elles sont dirigées, chacune de ces ailes portant une paire d'arceaux élastiques (13, 14) respectivement (15, 16) qui sont reliés entre eux par une barrette (17) respectivement (18) placée dans un plan moyen (RR') parallèle à celui desdites ailes, chaque barrette portant un premier crochet d'accrochage (19) respectivement (20) apte à coopérer avec chacune des ailes (23) respectivement (24) du profilé (2), et en ce que lesdits moyens d'association montés sur ledit fond (5) comprennent des seconds crochets dits d'association (27, 28, 29, 30) prévus de manière à coopérer avec des encoches (25, 26) et des saillies (61, 62) placées dans les régions inférieures opposées (57, 58) de deux secondes parois latérales (51, 52) perpendiculaires auxdites premières parois (53, 54, 55, 56).

2. Appareil électrique selon la revendication 1, caractérisé en ce que les deux sortes de crochets sont élastiquement mobiles dans les directions rectangulaires (G, H) respectivement (K, J) et sont disposés de part et d'autre d'un logement central (7) du fond (5), concourant à la fixation d'organes allongés placés à l'intérieur (12) de l'appareil, tels qu'une armature d'électro-aimant (65).

3. Appareil électrique selon la revendication 2, caractérisé en ce que des régions mobiles (35, 36, 37, 38) des arceaux (13, 14, 15, 16) sont reliées à des parois (31, 32, 33, 34) portant respectivement les seconds crochets (27, 28, 29, 30) par des portions de matière déformable (39, 40, 41, 42) qui comportent chacune un pli saillant (43, 44) dirigé vers le logement (7) et sont placées entre les portions (31, 32) et l'aile correspondante (9) de façon telle que des pressions opposées (G, H) exercées sur les crochets d'accrochage (19, 20) pour les écarter, communiquent aux crochets d'association (27, 28, 29, 30) des déplacements de directions opposées à (J, K), tandis que des efforts opposés exercés sur les crochets (19, 20) en sens inverse de (G, H) provoquent un rapprochement des crochets d'association (27, 28, 29, 30) en sens (J, K).

4. Appareil électrique selon l'une des revendications 1 à 3, caractérisé en ce que le boîtier (50) est formé par l'association de deux demi-boîtiers (3, 4) le long d'un plan de joint passant par le logement (7) et parallèle à un axe longitudinal du profilé (2), chaque demi-boîtier portant sur des parois transversales opposées (53, 54) respectivement (55, 56) dirigées vers l'intérieur (12), des ouvertures (25, 26) ou des saillies (62, 61) dont les rebords coopèrent avec les crochets d'association (27, 28, 29, 30).

5. Appareil électrique selon l'une des revendications 1 à 4, caractérisé en ce que des régions inférieures (66) du boîtier (50) placées au voisinage de l'ouverture (60) présentent des dégagements (63, 64) dans lesquels sont partiellement placés les arceaux flexibles (13, 14, 15, 16).

## Claims

1. An electrical apparatus, particularly a relay or smallsize contactor, comprising a hollow prism-shaped casing (50) adapted to accomodate a particular device and having a rectangular opening (60) in a lower area thereof opposite to connection terminals, opening which is closed by a generally rectangularly-shaped removable bottom (5) of thermoplastic material which is provided, on the one hand, at the side of its upper surface, with fastening means having fastening hooks (27, 28, 29, 30) adapted to cooperate with holding means located on said casing (50) for securing said bottom (5) to said casing (50) and, on the other hand, at the side of its lower surface, with two opposite side flanges (8, 9) having bevelled parts analog to hooks (19, 20) for receiving the flanges (23, 24), of a fixed shaped metal rail (2), characterized in that said opposite side flanges (8, 9) have a width (a) less than the distance (b) separating two first opposite side walls (53, 54), respectively (55, 56) of the case (50) towards which they extend, each of said flanges being provided with a pair of resilient hoops (13, 14), respectively (15, 16) which are connected with each other by a connecting strip (17), respectively (18) located in a median plane (RR') parallel to the plane of said flanges, each connecting strip being provided with a first hooking hook (19), respectively (20) adapted to cooperate with each of said flanges (23), respectively (24) of said shaped rail (2), and in that said connecting means secured to said bottom (5) comprise second hooks referred to as fastening hooks (27, 28, 29, 30) adapted to cooperate with notches (25, 26) and projections (61, 62) located in opposite lower areas (57, 58) of a second pair of side walls (51, 52) orthogonal to said first walls (53, 54, 55, 56).

2. An electrical apparatus according to claim 1, characterized in that both sorts of hooks · are resiliently movable in orthogonal directions to each other (G, H), respectively (K, J) and are disposed on opposite sides of a central housing (7) in said bottom (5) for aiding in fastening elongate members within (12) said apparatus, such as an electromagnet armature (65).

3. An electrical apparatus according to claim 2, characterized in that movable areas (35, 36, 37, 38) of said hoops (13, 14, 15, 16) are connected with walls (31, 32, 33, 34) which are provided with said second hooks (27, 28, 29, 30) through portions of a flexible material (39, 40, 41, 42) each of which defines a projecting bend (43, 44) facing towards said housing (7) and which are disposed between portions (31, 32) and the associated flange (9) so that application of opposite pressure loads (G, H) onto said hooking hooks (19, 20) to open same imparts to said fastening hooks (27, 28, 29, 30) movements in directions opposite to directions (J, K) and application of opposite pressure loads onto said hooks (19, 20) in directions opposite to directions (G, H) cause said fastening hooks (27, 28, 29, 30) to move towards each other in said direction (J, K).

4. An electrical apparatus according to any one of claims 1 to 3, characterized in that said casing (50) consists of a pair of casing halves (3, 4) joined to each other along a junction plane passing through said housing (7) and extending parallel to a longitudinal axis of said shaped rail (2), each of said casing halves being provided, in inwardly (12) extending, opposite transverse walls (53, 54) respectively (55, 56), with notches (25, 26) or projections (62, 61) having flanges which cooperate with said fastening hooks (27, 28, 29,30).

5. An electrical apparatus according to any one of claims 1 to 4, characterized in that lower areas (66) of said casing (50) adjacent to said opening (60) are provided with clearances (63, 64) in which portions of said flexible hoops (13, 14, 15, 16) partially extend.

**Pantentansprüche**

1. Elektrogerät, insbesondere ein Relais oder kleiner Schalter, mit einem prismatischen, hohlen Gehäuse (50), welches eine besondere Vorrichtung aufnehmen kann und dessen unter Zone, gegenüber den Anschlussklemmen, eine rechteckige Öffnung (60) aufweist, die von einem beweglichen, im wesentlichen rechteckigen, Boden (5) verschlossen wird, der aus thermoplastischem Material hergestellt ist und, einerseits, aufseiten der oberen Fläche, Verbindungsmittel mit Verbindungshaken (27, 28, 29, 30), die mit auf dem Gehäuse (50) befindlichen Haltemitteln zusammenarbeiten, besitzt, um besagten Boden (5) auf besagten Gehäuse (50) zu befestigen und, andererseits, aufseiten seiner unteren Fläche, zwei seitliche, einander gegenüberliegende Flügel (8, 9) mit abgeschrägten hakenähnlichen Teilen (19, 20) zur Aufnahme der Flügel (23, 24) einer unbeweglichen profilierten Metallschiene (2), dadurch gekennzeichnet, dass besagte einander gegenüberliegende seitliche Flügel (8, 9) von geringerer Breite (a) sind als die (b), welche zwei erste einer gegenüberliegende Seitenwände (53, 54), bzw. (55, 56) des Gehäuses (50) trennt, gegen die sie gerichtet sind, wobei jeder dieser Flügel zwei elastische Bögen (13, 14), bzw. (15, 16) trägt, die durch einen Verbindungssteg (17), bzw. (18) verbunden sind, welcher sich in der mittleren Ebene (RR') parallel zu der besagter Flügel befindet ; jeder Steg trägt einen ersten Haken (19) bzw. (20), der mit jedem der Flügel (23), bzw. (24) der Profilschiene (2) zusammenarbeitet und dass besagte, auf den Boden (5) montierte Verbindungsmittel zweite, Verbindungshaken genannte Haken (27, 28, 29, 30) haben, die mit Einkerbungen (25, 26) und Vorsprüngen (61, 62) zusammenarbeiten, welche in den unteren, einander gegenüberliegenden Zonen (57, 58) zweier zweiter Seitenwände (51, 52), die senkrecht zu besagten ersten Wänden (53, 54, 55, 56) verlaufen, angeordnet sind.

2. Elektrogerät nach Anspruch 1, dadurch gekennzeichnet, dass beide Arten von Haken elastisch im Rechteck (G, H), bzw. (K, J) beweglich sind, sich, einander gegenüberliegend, seitlich von einer zentralen Behausung (7) des Bodens (5) befinden und bei der Befestigung von, im Inneren (12) des Gerätes angebrachten, länglichen Organen, wie zum Beispiel einem Elektromagnetanker, mitwirken.

3. Elektrogerät nach Anspruch 2, dadurch gekennzeichnet, dass die beweglichen Zonen (35, 36, 37, 38) der Bögen (13, 14, 15, 16) mit Wänden (31, 32, 33, 34), die jeweils die zweiten Haken (27, 28, 29, 30) tragen, durch Abschnitte aus verformbarem Material (39, 40, 41, 42) verbunden sind, die jeweils einen hervorspringenden, gegen die Behausung (7) gerichteten Knick (43, 44) haben und zwischen den Abschnitten (31, 32) und dem entsprechenden Flügel (9) so angeordnet sind, dass entgegengesetzte, auf die Haken (19, 20) zu deren Abstandsvergrösserung einwirkende Druckkräfte (G, H) die Verbindungshaken (27, 28, 29, 30) in entgegesetzte Richtungen (J, K) verschieben, während entgegengesetzte und in der entgegengesetzten Richtung von (G, H) auf die Haken (19, 20) wirkende Kräfte eine Annäherung der Vinbindungshaken (27, 28, 29, 30) in Richtung (J, K) bewirken.

4. Elektrogerät nach einem der Ansprüche 1 bis 3, dadurch gekennzeichnet, dass das Gehäuse (50) entsteht durch die Zusammenfügung von zwei Gehäusehälften (3, 4) entlang einer Verbindungsebene, die die Behausung (7) schneidet und parallel ist zu einer Längsachse der Profilschiene (2), wobei jede Gehäusehälfte auf gegenüberliegenden, ins Innere (12) gerichteten, Querwänden (53, 54), bzw. (55, 56) Öffnungen (25, 26) oder Vorsprünge (62, 61) hat, deren Ränder mit den Verbindungshaken (27, 28, 29, 30) zusammenarbeiten.

5. Elektrogerät nach einem der Ansprüche 1 bis 4, dadurch gekennzeichnet, dass untere, in der Nähe der Öffnung (60) befindliche, Zonen (66) des Gehäuses (50) Aussparungen (63, 64) haben, in denen die flexibles Bögen (13, 14, 15, 16) teilweise angeordnet sind.

FIG.1

FIG.2

FIG. 3

FIG. 5

FIG. 4

FIG. 6

0 080 909